# EUROPEAN PATENT APPLICATION

(11) **EP 4 667 309 A1**
(43) Date of publication of application: **24.12.2025**
(21) Application number: 24182661.9
(22) Date of filing: 17.06.2024
(51) Int. Cl.: B60W 10/02, B60W 30/186

(54) **METHOD FOR A VEHICLE COMPRISING DUAL CLUTCHES**

(71) Applicant: Volvo Car Corporation, 405 31 Göteborg (SE)
(72) Inventor: Shekhar, Rudrendu, SE-405 31 Göteborg (SE); Riikonen, Mikael, SE-405 31 Göteborg (SE); Idegren, Martin, SE-405 31 Göteborg (SE); Sondhi, Eshwar, SE-405 31 Göteborg (SE)
(74) Representative: Nederlandsch Octrooibureau

(57) **Abstract**

Method for a vehicle comprising two clutches connected to rear wheels of the vehicle and arranged to transmit torque to the rear wheels of the vehicle, the two clutches being connected to a propulsion actuator, the operating method comprising detecting an oversteering situation based on first data indicative of a vehicle motion state, detecting that a propulsion torque generated by the propulsion actuator is above a first threshold based on second data indicative of the propulsion torque generated by the propulsion actuator, and adjusting a torque request to the two clutches, wherein the two clutches are arranged to transmit torque to the rear wheels based on the torque request and based on the propulsion torque generated by the propulsion actuator.

## Description

### Technical Field

The current disclosure relates to a method and/or an apparatus for a vehicle comprising two clutches connected to rear wheels of the vehicle and arranged to transmit torque to the rear wheels of the vehicle.

### Background Art

In vehicles with a propulsion actuator on the rear axle, power sliding is a sporty driving technique in which the propulsion torque on the rear axle is used to reduce the lateral forces on the rear wheels and enables the driver to control the heading of the vehicle in an oversteering situation.

Power sliding can be done effectively in vehicles having a torque vectoring dual clutch (TVDC) on the rear axle. TVDC is a type of transmission system that consists of two individual clutches driven by a propulsion actuator like an electric motor or a combustion engine. Each clutch is connected to a wheel, and the torque generated by the propulsion actuator can be distributed between the left and the right wheel.

### Summary

To accurately control the lateral forces on the rear axle during an oversteering situation, the vehicle needs to regulate the longitudinal slip on the rear axle by modulating the propulsion torque request (for instance by using accelerator pedal inputs). This becomes difficult in a vehicle having two clutches connected to the rear axle. During an oversteering situation, usually the vertical or normal force (perpendicular to the ground) acting on the curve inside rear wheel (the wheel located on the inside side of the curve) is less compared to the vertical or normal force acting on the curve outside rear wheel (the wheel located on the outside side of the curve). In this case, if the torque transmitted by the clutches to the rear wheels is such that each rear wheel receives half of the propulsion torque generated by the propulsion actuator, the rear wheel located on inside side of the curve may start spinning up at the same speed with the propulsion actuator, and a high slip on the clutch connected to the rear wheel located on the outside side of the curve may be generated. This is because the wheel located on the inside side of the curve can withstand less longitudinal forces before starting to slip on the road surface than the wheel located on the outside side of the curve due to the fact that the normal or vertical force acting on the wheel located on the inside side of the curve is less than the normal or vertical force acting on the wheel located on the outside side of the curve.

This problem is even worse if the propulsion torque generated by the propulsion actuator is unequally distributed between the two clutches such that the clutch connected to the rear wheel located at the inside side of the curve transmits more than half of the propulsion torque to said rear wheel and the other clutch transmits the rest of the propulsion torque to the other wheel. This is usually done during an oversteering situation because it allows to get slip on the rear wheel on the outside side of a curve by applying a lower torque than to the other rear wheel. Having more torque on the curve-inside rear wheel generates more longitudinal force on said wheel compared to the curve-outside rear wheel. This difference in longitudinal forces generates a yaw torque around the vertical axis of the vehicle which helps to reduce oversteering. However, this may cause the rear wheel located at the inside side of the curve to spin up with the propulsion actuator and cause slippage in the clutch connected to the rear wheel on the outside side of the curve. When this happens, the propulsion torque generated by the propulsion actuator might be reduced to either protect the outside clutch by reducing clutch slip, or to reduce excessive wheel slip on the curve inside wheel.

If the propulsion torque is not reduced, it can lead to permanent damage of the curve outside clutch due to the high clutch slip combined with a high propulsion torque demanded by the driver for power sliding.

If the propulsion torque is not reduced, it can lead to permanent damage of the curve outside clutch due to the high clutch slip combined with a high propulsion torque demanded by the driver for power sliding.

According to a first aspect, the disclosure comprises a method for a vehicle comprising two clutches connected to rear wheels of the vehicle and arranged to transmit torque to the rear wheels of the vehicle, the two clutches being connected to a propulsion actuator, the method comprising detecting an oversteering situation based on first data indicative of a vehicle motion state, detecting that a propulsion torque generated by the propulsion actuator is above a first threshold based on second data indicative of the propulsion torque generated by the propulsion actuator, and adjusting a torque request to the two clutches, wherein the two clutches are arranged to transmit torque to the rear wheels based on the torque request and based on the propulsion torque. Each of the two clutches is connected to the propulsion actuator and to a corresponding rear wheel and comprises an individual capacity to transmit torque from the propulsion actuator to the corresponding rear wheel to which is connected. The individual capacity of each of the two clutches to transmit torque to the corresponding rear wheel can be adjusted based on the torque request.

In this way, the clutches on the rear axle can be overlocked when the vehicle is in an oversteering situation and when the driver demands a significant amount of torque on the rear axle connecting the rear wheels with an intention to power slide. Overlocking the clutches increases the torque capacity of both clutches equally, such that the sum of the individual clutch torque capacity exceeds the propulsion torque from the propulsion actuator on the rear axle. The result is that the curve outside and the curve inside wheels are more rigidly connected, which forces them to rotate at the same speed.

This provides the driver direct control over the longitudinal slip of the rear wheels, and hence the lateral force on the rear axle, with the accelerator pedal. Thus, the driver can balance the lateral forces on the front and rear axles in a more predictable way, can hold the slide, and can control the heading of the vehicle more accurately during power sliding.

Also, when the clutches are overlocked, the total torque transfer capacity of the clutches exceeds the propulsion torque generated by the propulsion actuator, and thus the slip on the clutches is drastically reduced. Thus, the clutches are protected from damage caused due to high clutch slip with high torque demand during a power sliding situation.

Adjusting the torque request may comprise increasing the torque request to the two clutches.

Increasing the torque request may comprise increasing an individual capacity of each of the two clutches to transmit torque to the rear wheels such that the sum of the individual capacities of the two clutches exceeds the propulsion torque generated by the propulsion actuator.

The torque request may be adjusted based on the amount of oversteering of the vehicle.

As said, power sliding is a sporty driving technique in which the propulsion torque on the rear axle is used to reduce the lateral forces on the rear wheels and force the vehicle into an oversteering situation. This allows to control oversteering through steering and/or accelerator pedal inputs from the driver to maintain a slide. Steering inputs and accelerator pedal inputs control the balance between the lateral forces on the front axle and the rear axle. The balance between front and rear axle lateral forces is used by the driver to control the heading of the vehicle, to either get a faster exit out of a corner, or to set up and maintain a slide into the upcoming corners.

The torque request may be increased if the amount of oversteering increases.

The torque request may be decreased if the amount of oversteering decreases.

Detecting the oversteering situation may be further based on third data indicative of a driving intention of a driver of the vehicle.

The first data indicative of the vehicle motion state may be based on at least one of a lateral acceleration of the vehicle, a yaw rate of the vehicle and a rotational speed of wheels of the vehicle and/or is obtained by applying mathematical models.

The third data indicative of a driving intention may be based on at least one of an accelerator request, a steering wheel angle of the vehicle and a brake request of the vehicle and/or is obtained by applying mathematical models.

The method may further comprise detecting, based on the second data, that the propulsion torque generated by the propulsion actuator is equal or below the first threshold and, adjusting the torque request to decrease the individual capacity of the two clutches to transmit torque to the rear wheels such that the sum of the individual capacities of the two clutches does not exceed the propulsion torque generated by the propulsion actuator.

Furthermore, the method may comprise detecting a braking request and adjusting the torque to decrease the individual capacity of the two clutches to transmit torque to the rear wheels such that the sum of the individual capacities of the two clutches does not exceed the propulsion torque generated by the propulsion actuator.

According to another aspect, a control unit for a vehicle is provided, the vehicle comprising two clutches connected to rear wheels of the vehicle and arranged to transmit torque to the rear wheels of the vehicle, the two clutches further being connected to a propulsion actuator, wherein the control unit is configured to detect an oversteering situation based on first data indicative of a vehicle motion state, detect that a propulsion torque generated by the propulsion actuator is above a first threshold based on second data indicative of the propulsion torque generated by the propulsion actuator, and adjust a torque request to the two clutches, wherein the clutches are arranged to transmit torque to the rear wheels based on the torque request and based on the propulsion torque generated by the propulsion actuator.

The control unit is further configured to perform the method above described.

According to another aspect, a vehicle is provided comprising the control unit, a propulsion actuator and two clutches connected to the propulsion actuator. Each of the two clutches is connected to a wheel, and the propulsion torque generated by the propulsion actuator can be distributed equally or unequally between the left and the right wheel. Such a system also facilitates overlock, wherein the sum of the individual clutch capacities exceeds the propulsion torque from the propulsion actuator. Provided that the propulsion torque from the actuator is sufficient to reduce the lateral forces on the rear axle, to an extent that an oversteering situation can be induced, clutch overlock can be effectively used to maintain a power sliding.

### Brief Description of Drawings

Figure 1 illustrates a block diagram of a vehicle system according to the disclosure.
Figure 2 illustrates a flowchart schematically depicting a method according to the disclosure.
Figure 3 illustrates schematically a view of a vehicle according to an embodiment of the disclosure.
Figures 4 and 5 schematically illustrate forces acting on a wheel and a vehicle, respectively.

### Description of Embodiments

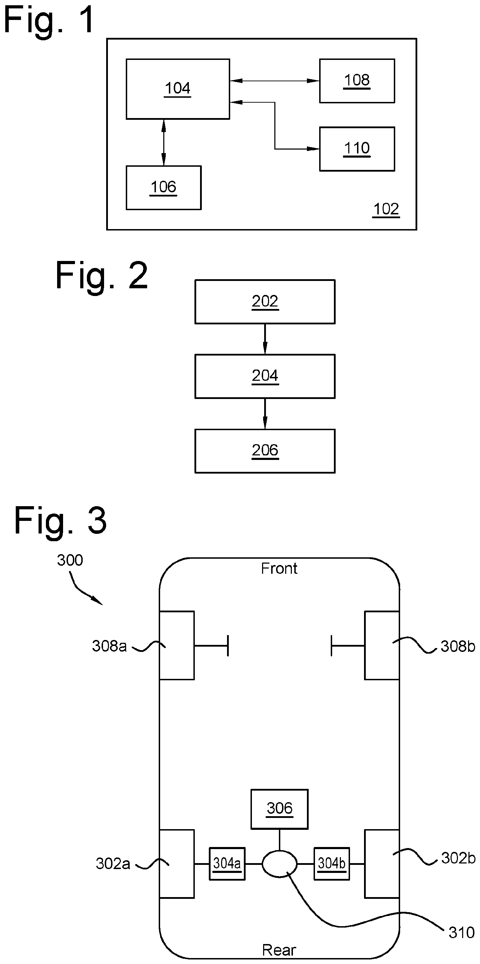

Figure 1 illustrates a block diagram of a vehicle system 102 according to the disclosure. The operating or vehicle system 102 may comprise a control unit 104, a memory 106, a sensor unit 108, and a communication unit 110. The control unit 104 is connected to the memory 106, the sensor unit 108, and the communication unit 110. The communication unit 110 may transmit and receive information via Bluetooth, through a wireless communication network, for example, a 4G network, and/or using any other suitable communication technology.

Figure 2 illustrates a flowchart schematically depicting a method for a vehicle comprising two clutches connected to rear wheels of the vehicle and arranged to transmit torque to the rear wheels of the vehicle, the two clutches being connected to a propulsion actuator. The method of Figure 2 may be performed by the control unit 104 of Figure 1.

Figure 3 illustrates a view of a vehicle 300 comprising the vehicle system of Figure 1 (not shown) comprising four wheels 308a, 308b, 302a and 302b. The vehicle 300 comprises further two clutches 304a and 304b respectively connected to the rear wheels 302a and 302b and to a propulsion actuator 306. The two clutches 304 comprise a first clutch 304a and a second clutch 304 b and are configured to transmit torque to the rear wheels 302 based on a torque request generated by the control unit 104 and a propulsion torque generated by the propulsion actuator 306.

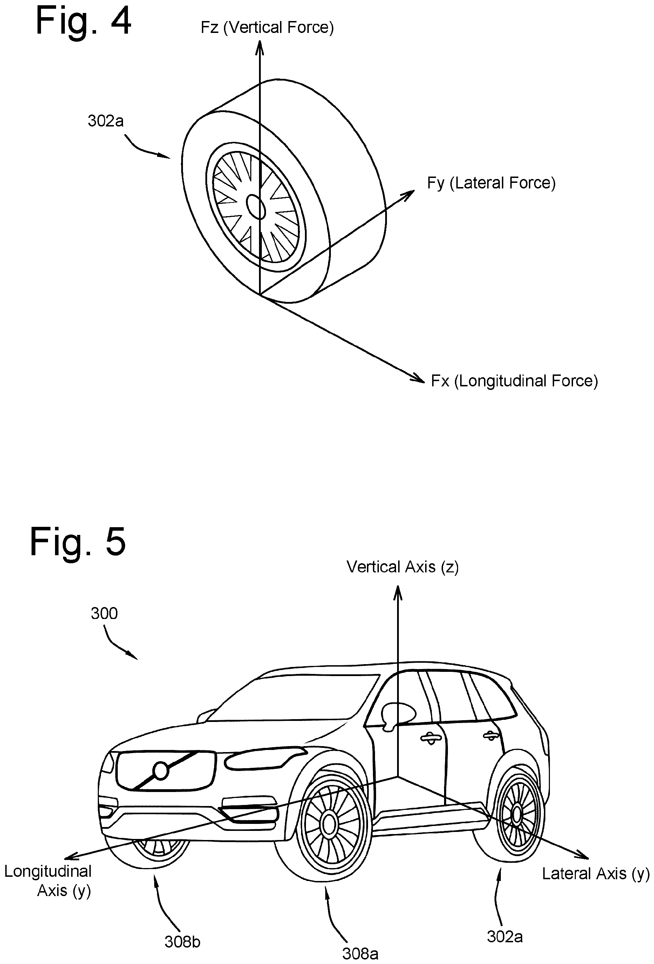

Figures 4 and 5 schematically illustrate directions of vertical, lateral and longitudinal forces that may be acting on a wheel 302a and a vehicle 300, respectively.

The two clutches 304 may be mechanical or hydraulic clutches or any other kind of clutches. If the clutches 304 are hydraulic ones, the pressure of the clutches may be increased or decreased based on the adjusted torque request. If the pressure is increased, the clutches 304 capacity to transmit torque to the rear wheels 302 will also be increased such that the sum of the capacity to transmit torque of the first clutch 304a and the capacity to transmit torque of the second clutch 304b is more than the propulsion torque generated by the propulsion actuator 306. If the clutches are mechanical, any other method to modify the capacity of transmitting torque to the rear wheels may be used.

As said, the method of Figure 2 may be performed by the control unit 104 of Figure 1 which may be arranged at the vehicle 300 of Figure 3.

In step 202, the method of Figure 2 comprises detecting an oversteering situation based on first data indicative of a vehicle motion state. The first data is received by the processing unit 104 of the vehicle system 102. The vehicle motion state relates to the vehicle 300.

In some embodiments, the oversteering situation may be further detected in step 202 based on third data indicative of a driving intention of a driver of the vehicle 300.

The first data indicative of a vehicle motion state used in step 202 of Figure 2, may be based on, for instance, a lateral acceleration of the vehicle 300, a yaw rate of the vehicle 300 and/or a rotational speed of wheels 308 of the vehicle 300. The first data may be also obtained by applying mathematical models. The lateral acceleration of the vehicle 300, the yaw rate of the vehicle 300 and/or the rotational speed of any of the wheels 308 of the vehicle 300 may be received from the sensor unit 108. The sensor unit 108 may comprise an inertial measurement unit (IMU) comprising accelerometers and gyroscopes. The accelerometers may measure the lateral acceleration of the vehicle 300 and the gyroscopes may measure the yaw rate of the vehicle 300. Furthermore, the sensor unit 108 may comprise wheel speed sensor to measure the rotational speed of the wheels 308. For instance, the sensor unit may comprise four wheel speed sensors, one for each wheel 308 of the vehicle 300. The sensor unit 108 may further comprise driver input sensors (DIS) such as a steering angle sensor to detect a steering angle of a steering wheel of the vehicle 300, a brake pedal sensor to detect a brake pedal position and/or an accelerator pedal sensor to detect an accelerator pedal position. However, the sensor unit 108 may comprise any other kind of sensors allowing to obtain the data needed.

The third data indicative of a driving intention that may be used in step 202 to detect the oversteering situation of the vehicle 300 may be based on at least one of a position of an accelerator pedal of the vehicle 300, a steering wheel angle of the vehicle 300 and a position of a brake pedal of the vehicle 300. The third data may be obtained by applying mathematical models.

After detecting the oversteering situation in step 202, the method of Figure 2 proceeds to step 204 wherein the processing unit 104 detects that the propulsion torque generated by the propulsion actuator 306 is above a first threshold based on second data indicative of the propulsion torque generated by the propulsion actuator 306.

The method proceeds after step 204 to step 206 wherein a torque request to the two clutches 304 is adjusted. The two clutches 304 are arranged to transmit the propulsion torque to the rear wheels 302 based on said torque request generated by the control unit 104 and based on the propulsion torque generated by the propulsion actuator 306.

In some embodiments, adjusting the torque request may comprise increasing the torque request to the two clutches 304.

In a further embodiment, increasing the torque request may comprise increasing an individual capacity of each of the two clutches 304 to transmit torque to the rear wheels such that the sum of the individual capacities of the two clutches 304 exceeds the propulsion torque generated by the propulsion actuator 306.

The torque request may be adjusted based on an amount of oversteering of the vehicle 300 and a propulsion torque request. For instance, the torque request may be increased if the amount of oversteering increases, or if the propulsion torque request increases, or if both the propulsion torque request and the amount of oversteering increase.

Furthermore, the torque request may be decreased if the amount of oversteering decreases, or if the propulsion torque request decreases, or if both the propulsion torque request and the amount of oversteering decrease.

Furthermore, the method of Figure 2 may comprise detecting, based on the second data, that the propulsion torque generated by the propulsion actuator 306 is equal or below the first threshold and, adjusting the torque request to decrease the individual capacity of the two clutches 304 to transmit the propulsion torque to the rear wheels 302 such that the sum of the individual capacities of the two clutches 304 does not exceed the propulsion torque generated by the propulsion actuator 306

The method of Figure 2 may also comprise detecting a braking request, for instance from the brake pedal of the vehicle 300, and adjusting the torque request to decrease the individual capacity of the two clutches 304 to transmit the propulsion torque to the rear wheels 302 such that the sum of the individual capacities of the two clutches 304 does not exceed the propulsion torque generated by the propulsion actuator 306.

The method of Figure 2 allows to overlock the two clutches 304 on the rear axle when the vehicle 300 is in an oversteering situation and when the driver demands a significant amount of torque on the rear axle with an intention to power slide. Overlocking the two clutches 304 increases the torque capacity of the first clutch 304a and of the second clutch 304b equally, such that the sum of the individual clutch torque capacities of each of the two clutches 304 exceeds the propulsion torque generated by the propulsion actuator 306 on the rear axle. The result is that the curve outside and the curve inside wheels 302 are more rigidly connected, which forces them to rotate at the same speed.

This gives the driver direct control over the longitudinal slip, and hence the lateral force on the rear axle, with the accelerator pedal. Thus, the driver can balance the lateral forces on the front and rear axles in a more predictable way, can hold the slide, and can control the heading of the vehicle 300 more accurately during power sliding.
Another benefit of is that when the clutches 304 are overlocked, the total torque transfer capacity of the clutches 304 exceeds the propulsion torque generated by the propulsion actuator 306, and thus the slip on the clutches 304 is drastically reduced. Thus, the clutches 304 are protected from damage caused due to high clutch slip with high torque demand during a power sliding situation.

The method makes it easier for the driver to power slide a vehicle. As said, this is done by overlocking the clutches 304 on the rear axle, based on the evaluation of vehicle motion and driver intentions. As said, overlocking means that the sum of the wheel-individual clutch torques capacities exceeds the second torque from the propulsion actuator 306.

Also as said, an oversteering situation may be detected in step 202 of the method of Figure 2 based on the evaluation of vehicle motion and/or driver intentions. For instance, during an oversteering situation, the intention of the driver to power slide may be detected using the accelerator pedal position sensor. In this situation, the torque request to the clutches 304 may be increased, such that the two clutches 304 become overlocked. The amount of overlock may be proportional to the amount of oversteering and the driver's accelerator pedal demand. This means that the overlock may be increased if the oversteering increases or the driver presses more on the accelerator pedal and may be decreased if the oversteering decreases or the driver reduces the accelerator pedal. Overlock may not be allowed if the driver is not pressing the accelerator pedal or if the driver is braking.

Considering Figure 3, the propulsion actuator 306 generates a propulsion torque based on the propulsion torque request from the driver (the term driver through the description covers both human drivers or autonomous driven vehicles). The propulsion torque generated by the propulsion actuator 306 will be transmitted to the rear wheels 302 through the two clutches 304. To do that, a torque request indicating an instantaneous torque capacity request to each clutch will be sent. The sum of the instantaneous torque capacity requests to each clutch may equal the propulsion torque generated by the propulsion actuator 306.

For example, if the vehicle 300 is travelling in a straight line on a uniform surface and the propulsion torque generated by the propulsion actuator 306 is 2000 Newton meters (Nm), then an instantaneous torque capacity of 1000 Nm request is sent to each clutch 304 (indicated by the torque request). In this case, 1000 Nm is transmitted through clutch 304a to wheel 302a, and 1000 Nm is transmitted through clutch 304b to wheel 302b. In this case, the sum of the instantaneous torque capacity requests to each clutch 304 is 2000 Nm, which equals the propulsion torque generated by the propulsion actuator 306 2000 Nm.

If the propulsion torque generated by the propulsion actuator 306 is more than the sum of the instantaneous torque capacity requests to each clutch 304, it would lead to a slippage in the clutches 304. For example, the vehicle 300 is travelling in a straight line on a uniform surface and the propulsion torque generated by the propulsion actuator 306 is 2000 Nm. Then, if an instantaneous torque capacity of 500 Nm is requested to each clutch 304. In this case, 500 Nm is transmitted through clutch 304a to wheel 302a, and 500 Nm is transmitted through clutch 304b to wheel 302b. At the same time, each clutch 304 is slipping and dissipating the excess 1000 Nm generated by the propulsion actuator 306. Slipping means that the rotational speed at the input side of the clutch 304, which is connected to the propulsion actuator 306, and the output side of the clutch 304, which is connected to the wheels 302 are different. In this case the propulsion actuator 306 rotates faster than the rear wheels 302 since it accelerates due to the excess 1000 Nm which cannot be transmitted to the wheels 302 through the clutches 304.

If the propulsion torque generated by the propulsion actuator 306 is less than the sum of the instantaneous torque capacity request to each clutch 304, then it would lead to overlocked clutches and thus no slippage in the clutches 304. For example, if the vehicle 300 is travelling in a straight line on a uniform surface, the propulsion torque generated by the propulsion actuator 306 is 2000 Nm, and an instantaneous torque capacity of 2000 Nm is requested to each clutch 304, then in this case, 1000 Nm is transmitted through clutch 304a to wheel 302a, and 1000 Nm is transmitted through clutch 304b to wheel 302b. At the same time, each clutch 304 has an additional capacity to transmit 1000 Nm. Thus, there is no slippage in the clutches 304 and the rotation speed of the propulsion actuator 306 is directly proportional to the rotational speed of the wheels 302.

The present invention proposes that when a vehicle 300 is oversteering, and the driver, human or autonomous, intends to power-slide, which is detected based on the propulsion torque request to the propulsion actuator 306, then the instantaneous torque capacity request to the individual clutches 304 is increased such that the clutches are overlocked (i.e. sum of the instantaneous torque capacity request to each clutch 304 is more than the torque generated by the propulsion actuator 306). This gives the driver, human or autonomous, better control over the rotational speed of the rear wheels 304 because they are equal and directly proportional to the rotational speed of the propulsion actuator 306 and can be easily regulated using propulsion torque request to the propulsion actuator 306. The propulsion torque request to the propulsion actuator 306 can be generated using accelerator pedal inputs (in case of a human driver).

Those skilled in the art will appreciate that the methods, systems and components described herein may comprise, in whole or in part, a combination of analog and digital circuits and/or one or more appropriately programmed processors (e.g., one or more microprocessors including central processing units (CPU)) and associated memory, which may include stored operating system software, firmware and/or application software executable by the processor(s) for controlling operation thereof and/or for performing the particular algorithms represented by the various functions and/or operations described herein, including interaction between and/or cooperation with each other as well as transmitters and receivers. One or more of such processors, as well as other digital hardware, may be included in a single ASIC (Application-Specific Integrated Circuitry), or several processors and various digital hardware may be distributed among several separate components, whether individually packaged or assembled into a SoC (System-on-a-Chip).

Furthermore, the systems, methods and components described, and/or any other arrangement, unit, system, device or module described herein may for instance be implemented in one or several arbitrary nodes comprised in the host vehicle and/or one or more separate devices. In that regard, such a node may comprise an electronic control unit (ECU) or any suitable electronic device, which may be a main or central node. The systems, components and methods described herein may further comprise any computer hardware and software and/or electrical hardware known in the art configured to enable communication therebetween.

While the disclosure has been described with reference to exemplary embodiments, it will be understood by those skilled in the art that various changes may be made and equivalents may be substituted for elements thereof without departing from the scope of the disclosure. In addition, many modifications may be made to adapt a particular situation or material to the teachings of the disclosure without departing from the essential scope thereof. Therefore, it is intended that the disclosure not be limited to the particular embodiments disclosed, but that the disclosure will include all embodiments falling within the scope of the appended claims.

## Claims

1. A method for a vehicle (300) comprising two clutches (304) connected to rear wheels (302) of the vehicle and arranged to transmit torque to the rear wheels of the vehicle, the two clutches being connected to a propulsion actuator (306), the method comprising:
detecting (202) an oversteering situation based on first data indicative of a vehicle motion state;
detecting (204) that a propulsion torque generated by the propulsion actuator (306) is above a first threshold based on second data indicative of the propulsion torque generated by the propulsion actuator (306); and
adjusting (206) a torque request to the two clutches (304), wherein the two clutches (304) are arranged to transmit the propulsion torque generated by the propulsion actuator to the rear wheels (302) based on the torque request and based on the propulsion torque generated by the propulsion actuator (306).

2. The method according to claim 1, wherein adjusting (206) the torque request comprises increasing the torque request to the two clutches (304).

3. The method according to claim 2, wherein increasing the torque request comprises increasing an individual capacity of each of the two clutches (304) to transmit torque to the rear wheels such that the sum of the individual capacities of the two clutches exceeds the propulsion torque generated by the propulsion actuator (306).

4. The method according to any of the previous claims, wherein the torque request is adjusted based on an amount of oversteering of the vehicle.

5. The method according to claim 4, wherein the torque request is increased if the amount of oversteering increases.

6. The method according to claim 4, wherein the torque request is decreased if the amount of oversteering decreases.

7. The method according to any of the previous claims, detecting (202) the oversteering situation is further based on third data indicative of a driving intention of a driver of the vehicle.

8. The method according to any of the previous claims, wherein the first data indicative of the vehicle motion state is based on at least one of a lateral acceleration of the vehicle, a yaw rate of the vehicle and a rotational speed of wheels of the vehicle and/or is obtained by applying mathematical models.

9. The method according to claim 7, wherein the third data indicative of a driving intention is based on a steering wheel angle of the vehicle and/or is obtained by applying mathematical models.

10. The method according to claim 3, further comprising detecting (204), based on the second data, that the propulsion torque generated by the propulsion actuator (306) is equal or below the first threshold and, adjusting the torque request to decrease the individual capacity of the two clutches such that the sum of the individual capacities of the two clutches does not exceed the propulsion torque generated by the propulsion actuator (306).

11. The method according to claim 3, further comprising detecting a braking request and adjusting the torque to decrease the individual capacity of the two clutches such that the sum of the individual capacities of the two clutches does not exceed the propulsion torque generated by the propulsion actuator (306).

12. A control unit for a vehicle (300) comprising two clutches (304) connected to rear wheels (302) of the vehicle and arranged to transmit torque to the rear wheels of the vehicle, the two clutches being connected to a propulsion actuator (306), the control unit configured to:
detect (202) an oversteering situation based on first data indicative of a vehicle motion state;
detect (204) that a propulsion torque generated by the propulsion actuator (306) is above a first threshold based on second data indicative of the propulsion torque generated by the propulsion actuator (306); and
adjust (206) a torque request to the two clutches (304), wherein the clutches are arranged to transmit the propulsion torque generated by the propulsion actuator to the rear wheels based on the torque request and based on the propulsion torque generated by the propulsion actuator (306).

13. The control unit according to claim 12, further configured to perform any of claims 2-12.

14. A vehicle (300) comprising the control unit according to claim 13, a propulsion actuator and two clutches connected to the propulsion actuator.
